# EUROPEAN PATENT APPLICATION

(11) **EP 2 279 942 A1**
(43) Date of publication of application: **02.02.2011**
(21) Application number: 09425308.5
(22) Date of filing: 30.07.2009
(51) Int. Cl.: B64C 17/06

(54) **Gyroscopic stabilizer for aircraft**

(71) Applicant: Rocco, Marino, 70124 Bari (IT)
(72) Inventor: Rocco, Marino, 70124 Bari (IT)
(74) Representative: Bruni, Giovanni

(57) **Abstract**

Gyroscopic stabilizer for aircrafts comprising a toroidal rotor (2), housed on a shaft (3), a motor (4), at least a level sensor and being **characterized in that** said shaft (3) is constrained to at least a hinge (5), and to at least a sliding constraint (6) housed between the motor (4) and the toroidal rotor (2), said toroidal rotor (2) being arranged between at least a hinge (5) and at least a sliding constraint (6).

## Description

The present invention relates to a gyroscopic stabilizer for aircraft, in particular for those aircrafts provided with great wing surface, which is apt to control stability.

According to the state of art, few embodiments of similar products applied to aircrafts are known. A gyroscope is made up of a toroidal rotor spinning about an axis (spin axis), and when the rotor is spinning, its axis tends to maintain itself parallel to itself and to resist to any attempt to change its orientation. In particular, a gyroscope mounted on a gimbal joint allows the wheel to freely orient itself in the three directions of the space, so that its axis is oriented in the same direction even if the support changes its orientation. The gyroscope has cylindrical symmetry (with respect to the z axis) with moments of inertia coincident to the x and y axes, while it is different the one to the z axis. It is possible to calculate the axial moment of inertia experimentally, by maintaining the axis of the gyroscope horizontal and by attaching a mass on the peripheral circumference of the gyroscope. Therefore, the gyroscope functioning becomes similar to the one of a composed pendulum, from whose period of oscillation it is possible to obtain the moment of inertia, which is the sum of the moment of inertia of the pure gyroscope and of mR₂ contribution due to the mass m arranged at a distance R to the axis.

Moreover, the two rotation motions of a gyroscope are the precession and the nutation ones. The precession motion is similar to the motion of a top rotating about a principal inertial axis with angular speed directed along the axis.

While the precession motion is carried out on a horizontal plane, the nutation one is an oscillation along a vertical direction. In order to improve the stability of the aircraft, some civil aircrafts are provided with the wing end facing upwards but its effect is scarce; other ones are instead provided with a triangular gusset at the end of the wings, in a perpendicular direction to the wing plane.

An object of the present invention is to solve the problem of the insufficient stability, in disadvantageous environmental conditions of aircrafts, in particular when in landing phase, this moment being the one in which aircrafts lose a great deal of inertial energy.

The present invention solves the prefixed objects, as it is a gyroscopic stabilizer for aircrafts, and in particular for aircrafts provided with great wing surface, with the characteristics described in claim 1.These and other advantages will be highlighted in the detailed description of the invention, with specific reference to the appended drawing 1/1, which shows a not limiting embodiment of the present invention, in which:
- Fig. 1 shows a side view of the invention arranged on a wing of an aircraft;
- Fig. 2 shows an orthogonal view of the invention.

Referring to said figures, the gyroscope according to the invention is generally indicated with the reference number 1. It comprises a toroidal rotor 2, which is housed on a shaft 3, a motor 4, at least a level sensor and it is **characterized in that** said shaft 3 is provided with at least a hinge 5, at least a sliding constraint 6, this sliding constraint 6 being housed on the shaft 3 between the motor 4 and a toroidal rotor 2.

In addition, said shaft 3 is provided with at least a hinge 5 upstream and with at least a sliding constraint 6 downstream of the toroidal rotor 2.

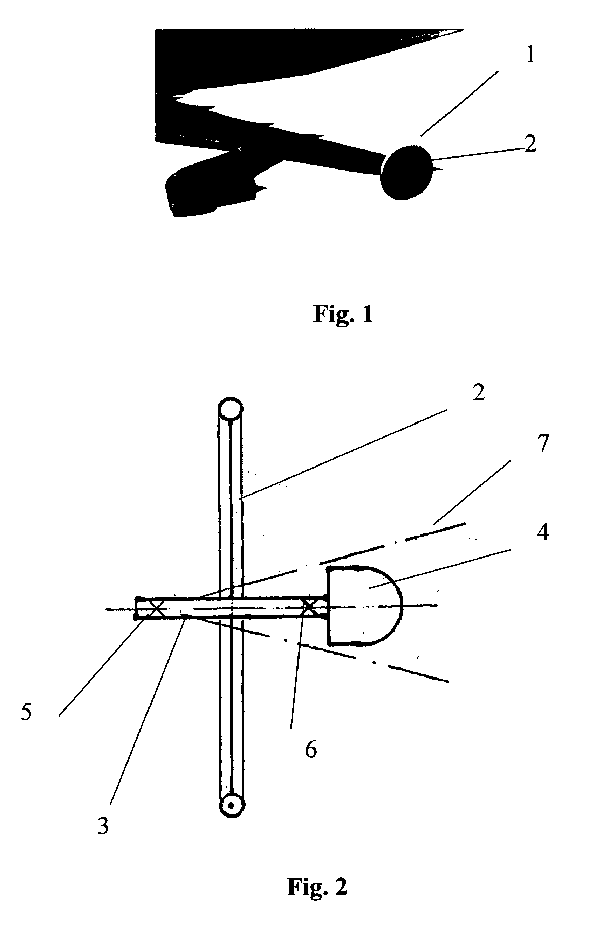

Moreover, said level sensor of the aircraft controls the angular variation 7 of the hinge 5, as described in fig. 2 The hinge 5 allows the rotation of an end of the shaft 3, while the slide 6 allows the free translation of the motor 4. Finally, the gyroscope is **characterized in that** the rotation of said toroidal rotor 2 can be actuated by hydraulic, pneumatic or electrical means. Referring to figure 1 as a way of example, at least a couple of gyroscopes is housed on the wings of an aircraft in perpendicular with respect to the wing surface. Whenever the wing changes in an uncontrolled way its position from the horizontal one, the level sensor activates both the rotation of an end of the shaft 3 by means of the hinge 5 and the translation of the motor 4 so that the motion of the toroidal rotor 2 opposes to the lift variations of the wings thus stabilizing the aircraft motion. Each of the two gyroscopes is housed on a wing and has a stabilizing effect on the aircraft. Said stabilizing effect is obtained by means of the motion in opposite direction of the toroidal rotors 2 housed on the opposite wings of the same aircraft.

Moreover, according to another embodiment of the invention, the couple of the gyroscopes can be housed on the fuselage of an aircraft near the piloting area.

The above described embodiments are naturally only a not limiting example of the invention.The application advantages of the gyroscopic stabilizer for aircrafts are clear: first of all, it is possible to increase the stability of the aircrafts, and in particular of the little dimensioned ones; it is possible to favour a greater flux of passengers, considered the improved safety; and finally it is simple to be realized and to be implemented.

## Claims

1. Gyroscopic stabilizer for aircrafts, comprising a toroidal rotor (2), housed on a shaft (3), a motor (4), at least a level sensor and being **characterized in that**:
• said shaft (3) is constrained to at least a hinge (5),
• said shaft (3) is constrained to at least a sliding constraint (6) housed between the motor (4) and the toroidal rotor (2),
• said toroidal rotor (2) is arranged between at least a hinge (5) and at least a sliding constraint (6).

2. Gyroscopic stabilizer according to claim 1, **characterized in that** said level sensor of the aircraft controls the angular variation of the hinge (5).

3. Gyroscopic stabilizer according to claim 1 or 2, wherein at least a couple of gyroscopes is arranged on the aircraft, on opposite portions with respect to the symmetrical longitudinal axis of the aircraft, so that each gyroscope provides the same moment of inertia with respect to said symmetrical longitudinal axis of the aircraft.

4. Gyroscopic stabilizer according to claim 3, wherein at least a couple of said gyroscopes is housed on the two wings of the aircraft, a gyroscope for each wing, in perpendicular to the wing surface.

5. Gyroscopic stabilizer according to claim 3, wherein at least a couple of said gyroscopes is housed on the fuselage of the aircraft, near the piloting area and symmetrically with respect to the fuselage axis.

6. Gyroscopic stabilizer according to any one of the preceding claims, **characterized in that** the rotation of said toroidal rotor (2) can be actuated by hydraulic, pneumatic or electrical means.
